(19) Europäisches Patentamt
European Patent Office
Office européen des brevets

(11) **EP 2 201 080 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
***C09K 5/06*** *(2006.01)*

(21) Anmeldenummer: **08805136.2**

(22) Anmeldetag: **08.10.2008**

(86) Internationale Anmeldenummer:
**PCT/EP2008/063447**

(87) Internationale Veröffentlichungsnummer:
**WO 2009/053245 (30.04.2009 Gazette 2009/18)**

(54) **THERMISCHE SPEICHERVORRICHTUNG UND VERWENDUNG VON MEHRSTOFFSYSTEMEN**

THERMAL STORAGE DEVICE AND USE OF MULTIPLE MATERIAL SYSTEMS

DISPOSITIF ACCUMULATEUR DE CHALEUR ET UTILISATION DE SYSTÈME À PLUSIEURS SUBSTANCES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.10.2007 DE 102007052235**

(43) Veröffentlichungstag der Anmeldung:
**30.06.2010 Patentblatt 2010/26**

(73) Patentinhaber: **Deutsches Zentrum für Luft- und Raumfahrt e.V.**
**51147 Köln (DE)**

(72) Erfinder:
• **BAUER, Thomas**
**70178 Stuttgart (DE)**
• **TAMME, Rainer**
**70197 Stuttgart (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
DE-A1- 3 038 844    DE-A1- 4 203 835
DE-A1- 4 244 465    DE-A1- 4 302 496
US-A- 4 430 241

**Beschreibung**

Die Erfindung betrifft eine thermische Speichervorrichtung.

Aus der DE 42 03 835 A1 ist ein Phasenwechselmaterial zu Wärmespeicherung bekannt, welches besteht aus einem Gemisch von Magnesiumnitrathexahydrat und Lithiumnitrat in einem Gewichtsverhältnis von 4 bis 6:1.

Aus der DE 42 44 465 A1 ist eine Mischung zur Speicherung für latente Wärme bekannt, welche mindestens ein Erdalkalihydroxid und mindestens einen mehrwertigen Alkohol umfasst.

Aus der DE 43 02 496 A1 ist die Verwendung eines Salzgemisches zur Speicherung latenter thermischer Energie bekannt.

Aus der US 4,430,241 ist ein Verfahren zur Herstellung von Partikeln für ein eutektisches Gemisch bekannt.

Aus der DE 30 38 844 A1 ist die Verwendung eines ternären Salzgemisches zur Wärmeübertragung und/oder als Wärmespeicher bekannt, wobei ein ternäres Salzgemisch aus Calciumnitrat, gegebenenfalls mit Kristallwasser, Kaliumnitrat und Natriumnitrat eingesetzt wird.

Aus der US 2004/0118449 A1 ist ein Solarkraftsystem bekannt, welches Wärmeenergie speichern kann.

Der Erfindung liegt die Aufgabe zugrunde, eine thermische Speichervorrichtung bereitzustellen, welche eine hohe Energiedichte bezüglich der Wärmespeicherung aufweisen.

Diese Aufgabe wird erfindungsgemäß dadurch gelöst, dass die thermische Speichervorrichtung mindestens ein Speichermedium umfasst, welches ein Mehrstoffgemisch ist mit einem Schmelzbereich zwischen der festen Phase des Gemischs und der flüssigen Phase des Gemischs, welches sich über mindestens 50 K erstreckt.

Ein entsprechendes Mehrstoffgemisch liegt zwischen dem Solidus und dem Liquidus in einer Schmelzphase vor. In dem entsprechenden Schmelzbereich kann sowohl sensible Wärme als auch Schmelzwärme gespeichert werden. In dem entsprechend großen Schmelzbereich (mit einer Temperaturbreite von mindestens 50 K) erfolgt ein Fest-Flüssig-Phasenwechsel.

Der Schmelzbereich ist durch die Zusammensetzung der Stoffe in dem Mehrstoffsystem einstellbar.

Das Speichermedium weist in dem Schmelzbereich eine erhöhte effektive Wärmekapazität auf. Dadurch erhält man eine erhöhte Energiedichte für die Wärmespeicherung im Vergleich zu einer rein sensiblen Wärmespeicherung.

Weiterhin lassen sich in der Speichervorrichtung mit einem Stoffsystem (dem Mehrstoffsystem) relativ große Temperaturbereiche abdecken, die beispielsweise in der Größenordnung von 50 K bis 100 K liegen können.

Durch die erfindungsgemäße Lösung wird ein Schmelzbereichsspeicher bereitgestellt, der durch Variation der Zusammensetzung des Mehrstoffsystems auf einfache Weise an eine Anwendung anpassbar ist.

Der Schmelzbereich erstreckt sich über mindestens 50 K. Dadurch erhält man eine hohe Temperaturspreizung mit entsprechend großem Temperatureinsatzbereich. Ferner erhält man eine hohe effektive Energiedichte für die Wärmespeicherung.

Es ist insbesondere vorgesehen, dass eine Übergangstemperatur von der festen Phase zu dem Schmelzbereich oberhalb von 100°C und insbesondere oberhalb von 120°C liegt. Es lässt sich dadurch ein Schmelzbereichsspeicher realisieren, welcher eine hohe Wärmedichte aufweist.

Insbesondere ist das Mehrstoffgemisch ein Gemisch aus zwei oder drei mischbaren Stoffen. Es können auch mehr als drei mischbare Stoffe verwendet werden. Es lässt sich dadurch auf einfache Weise zumindest ein Teilspeicher mit nur einem Speichermediumsystem ausrüsten.

Es hat sich als günstig erwiesen, wenn die Stoffe des Mehrstoffgemisches Salze sind und insbesondere Alkalisalze und/oder Erdalkalisalze. Dadurch lässt sich auf einfache Weise durch Einstellung der Gemischzusammensetzung die Temperaturbreite des Schmelzbereichs einstellen. Ferner lässt sich durch entsprechende Auswahl des Salzsystems die Anfangstemperatur und die Endtemperatur des Schmelzbereichs einstellen. Weiterhin weisen solche Metallsalze üblicherweise eine gute Mischbarkeit auf.

Insbesondere sind die Stoffe des Mehrstoffgemischs Nitrate und/oder Nitrite und/oder Sulfate und/oder Karbonate und/oder Chloride und/oder Hydroxide und/oder Bromide und/oder Fluoride und/oder Thiocyanate. Grundsätzlich ist eine beliebige Kombination zwischen diesen Stoffen möglich.

Es kann vorgesehen sein, dass das mindestens eine Speichermedium in eine Matrix eingebettet ist. Stoffgemische mit Schmelzbereichen neigen oft zur Phasentrennung. Durch die Einbettung in eine zusätzliche Matrix eines solchen Speichermediums lässt sich eine Phasentrennung vermeiden.

Insbesondere ist dann ein Matrixmaterial der Matrix in dem relevanten Temperaturbereich in der festen Phase, um eine Einbettung in dem relevanten Temperaturbereich zu ermöglichen.

Bei einer alternativen Ausführungsform ist eine Mischungseinrichtung zur Vermischung der Stoffe des Mehrstoffgemischs vorgesehen. Dadurch lässt sich einer Phasentrennung entgegenwirken, indem über die Mischungseinrichtung für eine Mischung gesorgt wird.

Die Mischungseinrichtung ist beispielsweise als Pumpeinrichtung und/oder Rühreinrichtung ausgebildet, um einer Phasentrennung entgegenzuwirken.

Es kann vorgesehen sein, dass mehrere Teilspeicher vorhanden sind, welche jeweils Speichermedium mit unterschiedlichem Schmelzbereich bezogen auf Verfestigungstemperatur und/oder Verflüssigungstemperatur und/oder Temperaturbreite des Schmelzbereichs aufweisen. Dadurch lässt sich ein Einsatzgebiet über einen hohen Temperaturbereich beispielsweise von mehreren 100 K realisieren.

Erfindungsgemäß wird ein Mehrstoffsystem mit einem Schmelzbereich einer Temperaturbreite von mindestens 50 K zwischen Verfestigungstemperatur und Verflüssigungstemperatur als thermisches Speichermedium verwendet.

Die nachfolgende Beschreibung bevorzugter Ausführungsformen dient im Zusammenhang mit den Zeichnungen der näheren Erläuterung der Erfindung. Es zeigen:

Figur 1    schematisch ein Ausführungsbeispiel einer thermischen Speichervorrichtung;

Figur 2    das Phasendiagramm des Zweistoffgemischs KNO$_3$-NaNO$_3$;

Figur 3    ein Enthalpie-Temperatur-Diagramm der Zweistoffmischung KNO$_3$(90 Gew. %)-NaNO$_3$(10%);

Figur 4    den Wärmefluss über der Temperatur für ein Zweistoffgemisch bei unterschiedlichen Zusammensetzungen;

Figur 5    den Wärmefluss über der Temperatur für ein Dreistoffgemisch bei unterschiedlichen Zusammensetzungen; und

Figur 6    eine schematische Darstellung einer kaskadierten thermischen Speichervorrichtung.

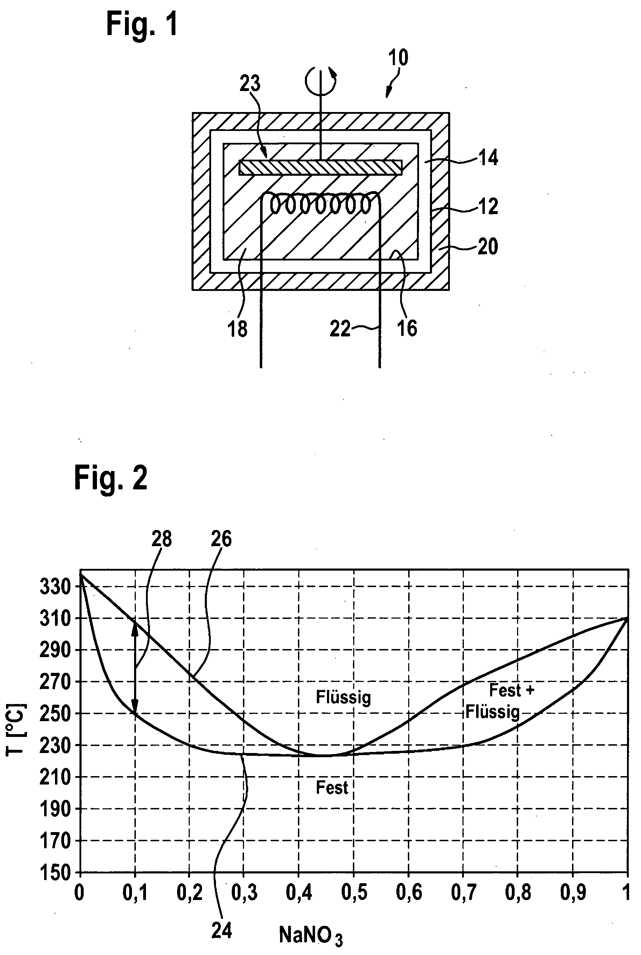

Ein Ausführungsbeispiel einer thermischen Speichervorrichtung, welches in Figur 1 schematisch gezeigt und dort mit 10 bezeichnet ist, umfasst einen Behälter 12 mit einer Wandung 14. Innerhalb der Wandung 14 sind eine oder mehrere Kammern 16 gebildet, welche ein Speichermedium 18 aufnehmen.

Der Behälter 12 weist eine thermische Innenisolierung und/oder Außenisolierung 20 auf.

Dem Behälter 12 ist eine Durchströmungseinrichtung 22 zugeordnet, durch die ein Arbeitsmedium die Kammer 16 so durchströmen kann, dass es an das Speichermedium 18 Wärme abgeben kann (in einem Beladungszyklus) oder Wärme aufnehmen kann (in einem Entladungszyklus).

Die thermische Speichervorrichtung umfasst eine Mischungseinrichtung 23, welche zur Durchmischung des Speichermediums 18 in der Kammer 16 dient. Die Mischungseinrichtung 23 ist beispielsweise als Pumpeinrichtung ausgebildet, welche Speichermedium permanent oder mindestens zeitweise umpumpt, um für eine Durchmischung zu sorgen. Sie kann auch als Rühreinrichtung ausgebildet sein, welche einen oder mehrere beispielsweise rotierbare Rührer umfasst, um für eine Durchmischung zu sorgen.

Erfindungsgemäß ist es vorgesehen, dass das Speichermedium 18 ein Mehrstoffgemisch ist, welches einen Schmelzbereich mit einer Temperaturbreite von mindestens 50 K aufweist.

Beispielhaft ist dazu in Figur 2 das Phasendiagramm des Zweistoffgemisches KNO$_3$-NaNO$_3$ gezeigt (aufgetragen über dem Gewichtsanteil von NaNO$_3$). Das Gemisch umfasst die beiden mischbaren Stoffe KNO$_3$ und NaNO$_3$.

Unterhalb einer Verfestigungstemperatur 24, welche gemischabhängig ist, liegt das Gemisch in der festen Phase (Solidus) vor. Oberhalb einer Verflüssigungstemperatur 26, welche ebenfalls abhängig ist von der Zusammensetzung des Gemisches, liegt das Gemisch in der flüssigen Phase (Liquidus) vor.

Bei bestimmten Gemischzusammensetzungen hat dieses Zweistoffgemisch einen Schmelzbereich 28, welcher sich über eine Temperatur von 50 K oder mehr erstreckt.

Bei dem in Figur 2 eingezeichneten Schmelzbereich, bei dem das Zweistoffgemisch aus 10 Gew.% NaNO$_3$ und 90 Gew.% KNO$_3$ zusammengesetzt ist, erstreckt sich der Schmelzbereich von 250°C bis ca. 300°C.

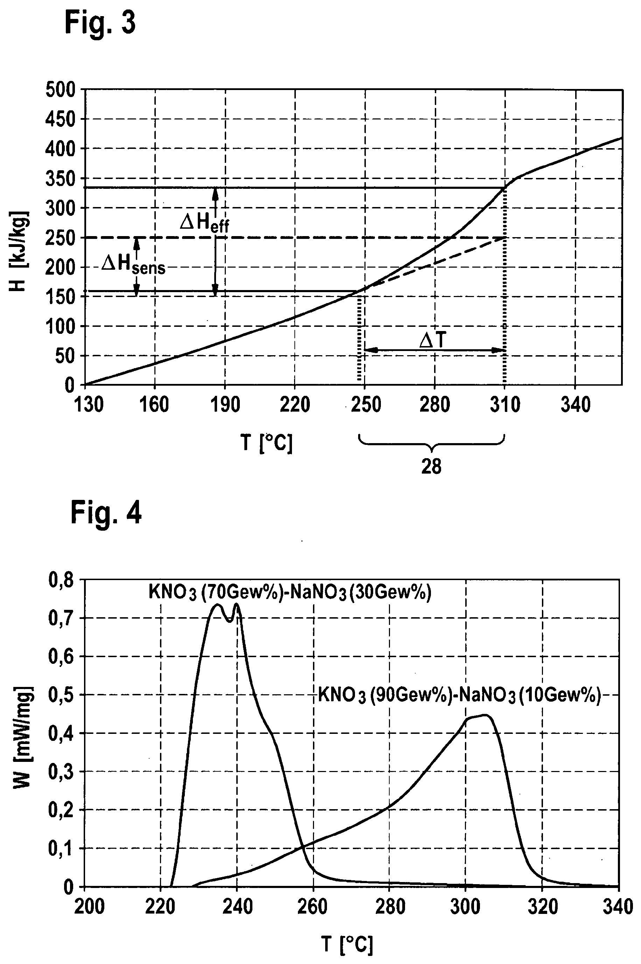

Für dieses Zweistoffgemisch ist in Figur 3 das zugehörige Enthalpie-Temperatur-Diagramm gezeigt. Die entsprechenden Werte wurden dabei aus DSC-Messungen erhalten (DSC - Differential Scanning Calorimeter).

Die Breite des Schmelzbereichs 28 ist die Temperaturspreizung $\Delta T$, in welchem die Speichervorrichtung 10 betreibbar ist. Durch Einstellung des Schmelzbereichs 28 über entsprechende Gemischzusammensetzung ist diese Temperaturbreite $\Delta T$ wählbar.

In dem Schmelzbereich 28 weist das Zweistoffgemisch im Vergleich zu einem sensiblen Speichermedium eine höhere effektive Wärmekapazität auf. Die sensibel gespeicherte Wärme $\Delta H$ ergibt sich aus der Wärmekapazität $C_p$ bei einer Temperaturänderung von der Temperatur $T_1$ auf die Temperatur $T_2$ eines Materials mit der Masse m als

$$\Delta H = m \cdot \int_{T_1}^{T_2} c_p \, dT$$

Im Liquidus ist $\Delta H$ im Wesentlichen proportional zur Temperatur. Im Solidus ist dies ebenfalls der Fall. Im Schmelzbereich 28 erhält man, wie in Figur 3 gezeigt ist, eine erhöhte effektiv gespeicherte Wärme $\Delta H_{eff}$. Durch Auswahl des Gemischs lässt sich das Verhältnis von $\Delta H_{eff}$ als Index zu $\Delta H_{sens}$ als sen- ' sibel gespeicherte Wärme beeinflussen.

Bei der erfindungsgemäßen Lösung wird ein Mehrstoffsystem mit nicht-eutektischer Mischung eingesetzt. Die Temperaturbreite des Schmelzbereichs 28 ist größer als 50 K. Die Verfestigungstemperatur 24 (Maximaltemperatur im Solidus) liegt vorzugsweise oberhalb von 100°C und insbesondere oberhalb von 130°C.

Mehrstoffgemische mit Schmelzbereichen 28 neigen grundsätzlich zu Phasentrennungen. Es kann deshalb vorgesehen sein, dass das Speichermedium in eine zusätzliche Matrix eines Materials eingebettet ist, welches in dem relevanten Temperaturbereich fest ist. Es wird dadurch ein Verbundsystem mit Matrixmaterial und eingebettetem Speichermedium bereitgestellt.

Alternativ kann durch die Mischungseinrichtung 23 einer Phasentrennung entgegengewirkt werden, indem insbesondere auf mechanischem Wege für eine Durchmischung der Stoffe des Mehrstoffgemischs gesorgt wird und damit einer Phasentrennung entgegengewirkt wird.

Bei dem Mehrstoffsystem können zwei Stoffe oder drei Stoffe oder auch mehr als drei Stoffe eingesetzt werden, welche mischbar sind. Mögliche Stoffe sind Alkalisalze und/oder Erdalkalisalze. Insbesondere werden Nitrate, Nitrite, Sulfate, Karbonate, Chloride, Hydroxide, Bromide, Fluoride oder Thiocyanate eingesetzt.

Mögliche Stoffkombinationen sind binäre und ternäre Salzsysteme wie Nitrat-Nitrat-Salzsysteme, Nitrat-Nitrit-Salzsysteme, Karbonat-Karbonat-Salzsysteme, Nitrat-Karbonat-Salzsysteme, Nitrat-Sulfat-Salzsysteme oder Sulfat-Sulfat-Salzsysteme.

In Figur 4 ist ein Diagramm des Wärmeflusses über der Temperatur für das System $KNO_3$-$NaNO_3$ bei zwei unterschiedlichen Zusammensetzungen gezeigt. Der Wärmefluss wurde durch DSC-Messungen ermittelt. Die Messungen wurden mit einer Probeneinwaage von ca. 20 mg und einer Heizrate von 10 K/min durchgeführt. Das Eutektikum hat eine Schmelztemperatur von 223°C und der Schmelzpunkt von $NaNO_3$ liegt bei 310°C und der Schmelzpunkt für $KNO_3$ bei 336°C.

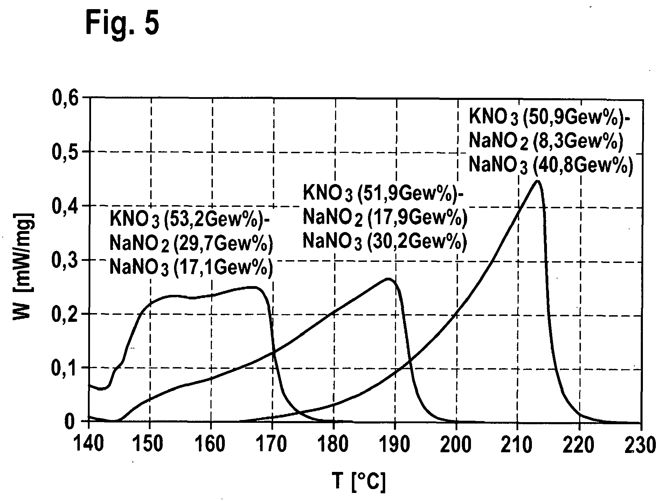

Figur 5 zeigt den Wärmefluss für das $KNO_3$-$NaNO_2$-$NaNO_3$-System mit drei verschiedenen Zusammensetzungen. Es wurden DSC-Messungen mit einer Probeneinwaage von ca. 20 mg und einer Heizrate von 5 K/min durchgeführt. Das Eutektikum hat eine Schmelztemperatur von ca. 142°C.

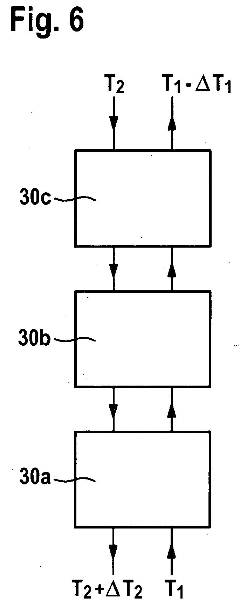

Es ist möglich, dass die Speichervorrichtung mehrere Teilspeicher 30a, 30b, 30c umfasst (Figur 6). Diese nehmen jeweils ein Speichermedium auf, welches ein Mehrstoffgemisch mit Schmelzbereich ist. Unterschiedliche Teilspeicher nehmen unterschiedliche Speichermedien auf. Es lassen sich dadurch Temperaturbereiche für die Speichervorrichtung abdecken, welche über mehrere 100 K gehen können; durch entsprechende Auswahl des Speichermediums in unterschiedlichen Teilspeichern lässt sich eine Kaskadierung von Schmelzbereichen bezüglich Verfestigungstemperatur und/oder Verflüssigungstemperatur und/oder Temperaturbreite des Schmelzbereichs erreichen.

Eine erfindungsgemäße thermische Speichervorrichtung 10 lässt sich zur Speicherung von thermischer Energie beispielsweise in der Gebäudetechnik, Prozesstechnik und Kraftwerkstechnik einsetzen.

**Patentansprüche**

1. Thermische Speichervorrichtung, umfassend mindestens ein Speichermedium (18), welches ein Mehrstoffgemisch ist mit einem Schmelzbereich zwischen der festen Phase des Gemischs und der flüssigen Phase des Gemischs, welcher sich über mindestens 50 K erstreckt.

2. Thermische Speichervorrichtung nach Anspruch 1, **dadurch gekennzeichnet, dass** eine Übergangstemperatur von der festen Phase zu dem Schmelzbereich oberhalb von 120°C liegt.

3. Thermische Speichervorrichtung nach einem der vorangehenden Ansprüche, **dadurch gekennzeichnet, dass** das Mehrstoffgemisch ein Gemisch aus zwei oder drei mischbaren Stoffen ist.

4. Thermische Speichervorrichtung nach einem der vorangehenden Ansprüche, **dadurch gekennzeichnet, dass** die Stoffe des Mehrstoffgemischs Salze sind.

5. Thermische Speichervorrichtung nach Anspruch 4, **dadurch gekennzeichnet, dass** die Stoffe des Mehrstoffgemischs Alkalisalze und/oder Erdalkalisalze sind.

6. Thermische Speichervorrichtung nach einem der vorangehenden Ansprüche, **dadurch gekennzeichnet, dass** die Stoffe des Mehrstoffgemischs Nitrate und/oder Nitrite und/oder Sulfate und/oder Karbonate und/oder Chloride und/oder Hydroxide und/oder Bromide und/oder Fluoride und/oder Thiocyanate sind.

7. Thermische Speichervorrichtung nach einem der vorangehenden Ansprüche, **dadurch gekennzeichnet, dass** das mindestens eine Speichermedium in eine Matrix eingebettet ist.

8. Thermische Speichervorrichtung nach Anspruch 8, **dadurch gekennzeichnet, dass** ein Matrixmaterial der Matrix in dem relevanten Temperaturbereich in der festen Phase vorliegt.

9. Thermische Speichervorrichtung nach einem der Ansprüche 1 bis 8, **gekennzeichnet durch** eine Mischungseinrichtung (23) zur Vermischung der Stoffe des Mehrstoffgemischs.

10. Thermische Speichervorrichtung nach Anspruch 10, **dadurch gekennzeichnet, dass** die Mischungseinrichtung (23) als Pumpeinrichtung und/oder Rühreinrichtung ausgebildet ist.

11. Thermische Speichervorrichtung nach einem der vorangehenden Ansprüche, **gekennzeichnet durch** eine Mehrzahl von Teilspeichern, welche jeweils Speichermedien mit unterschiedlichem Schmelzbereich bezogen auf Verfestigungstemperatur und/oder Verflüssigungstemperatur und/oder Temperaturbreite des Schmelzbereichs aufweisen.

12. Verwendung eines Mehrstoffsystems mit einem Schmelzbereich einer Temperaturbreite von mindestens 50 K zwischen Verfestigungstemperatur und Verflüssigungstemperatur als thermisches Speichermedium.

**Claims**

1. Thermal storage device, comprising at least one storage medium (18) which is a multicomponent mixture having a melting range between the solid phase of the mixture and the liquid phase of the mixture extending over at least 50 K.

2. Thermal storage device in accordance with claim 1, **characterized in that** a transition temperature from the solid phase to the melting range is above 120 °C.

3. Thermal storage device in accordance with any one of the preceding claims, **characterized in that** the multicomponent mixture is a mixture of two or three miscible components.

4. Thermal storage device in accordance with any one of the preceding claims, **characterized in that** the components of the multicomponent mixture are salts.

5. Thermal storage device in accordance with claim 4, **characterized in that** the components of the multicomponent mixture are alkaline salts and/or alkaline earth salts.

6. Thermal storage device in accordance with any one of the preceding claims, **characterized in that** the components of the multicomponent mixture are nitrates and/or nitrites and/or sulfates and/or carbonates and/or chlorides and/or hydroxides and/or bromides and/or fluorides and/or thiocyanates.

7. Thermal storage device in accordance with any one of the preceding claims, **characterized in that** the at least one storage medium is embedded in a matrix.

8. Thermal storage device in accordance with claim 8, **characterized in that** a matrix material of the matrix is in the solid phase in the relevant temperature range.

9. Thermal storage device in accordance with any one of claims 1 to 8, **characterized by** a mixing device (23) for mixing the components of the multicomponent mixture.

10. Thermal storage device in accordance with claim 10, **characterized in that** the mixing device (23) is configured as a pumping device and/or stirring device.

11. Thermal storage device in accordance with any one of the preceding claims, **characterized by** a plurality of partial stores, each having a storage medium with a different melting range with respect to solidification temperature and/or liquefaction temperature and/or temperature width of the melting range.

12. Use of a multicomponent system having a melting range with a temperature width of at least 50 K between solidification temperature and liquefaction temperature as the thermal storage medium.

**Revendications**

1. Dispositif accumulateur de chaleur, comprenant au moins un milieu accumulateur (18), lequel est un mélange de plusieurs substances avec une zone de fusion entre la phase solide du mélange et la phase liquide du mélange, laquelle s'étend sur au moins 50 K.

2. Dispositif accumulateur de chaleur selon la revendication 1, **caractérisé en ce qu'**une température de transition de la phase solide à la zone de fusion est supérieure à 120 °C.

3. Dispositif accumulateur de chaleur selon l'une quelconque des revendications précédentes, **caractérisé en ce que** le mélange de plusieurs substances est un mélange de deux ou trois substances miscibles.

4. Dispositif accumulateur de chaleur selon l'une quelconque des revendications précédentes, **caractérisé en ce que** les substances du mélange de plusieurs substances sont des sels.

5. Dispositif accumulateur de chaleur selon la revendication 4, **caractérisé en ce que** les substances du mélange de plusieurs substances sont des sels alcalins et/ou des sels alcalino-terreux.

6. Dispositif accumulateur de chaleur selon l'une quelconque des revendications précédentes, **caractérisé en ce que** les substances du mélange de plusieurs substances sont des nitrates et/ou des nitrures et/ou des sulfates et/ou des carbonates et/ou des chlorures et/ou des hydroxydes et/ou des bromures et/ou des fluorures et/ou des thiocyanates.

7. Dispositif accumulateur de chaleur selon l'une quelconque des revendications précédentes, **caractérisé en ce que** l'au moins un milieu accumulateur est encastré dans une matrice.

8. Dispositif accumulateur de chaleur selon la revendication 8, **caractérisé en ce qu'**un matériau de matrice de la matrice se présente dans la phase solide dans la plage de températures pertinente.

9. Dispositif accumulateur de chaleur selon l'une quelconque des revendications 1 à 8, **caractérisé par** un système de mélange (23) permettant de mélanger les substances du mélange de plusieurs substances.

10. Dispositif accumulateur de chaleur selon la revendication 10, **caractérisé en ce que** le système de mélange (23) est réalisé sous la forme d'un système de pompage et/ou d'un système d'agitation.

11. Dispositif accumulateur de chaleur selon l'une quelconque des revendications précédentes, **caractérisé par** une pluralité de parties d'accumulateur, lesquelles comprennent chacune des milieux d'accumulation avec une zone de fusion différente par rapport à la température de durcissement et/ou à la température de liquéfaction et/ou à la plage de températures de la zone de fusion.

12. Utilisation d'un système à plusieurs substances comprenant une zone de fusion d'une plage de températures d'au moins 50 K entre la température de durcissement et la température de liquéfaction comme milieu accumulateur thermique.

## Fig. 1

## Fig. 2

## Fig. 3

## Fig. 4

## Fig. 5

# Fig. 6

$T_2$  $T_1 - \triangle T_1$

30c

30b

30a

$T_2 + \triangle T_2$  $T_1$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4203835 A1
- DE 4244465 A1
- DE 4302496 A1
- US 4430241 A
- DE 3038844 A1
- US 20040118449 A1